(19) Europäisches Patentamt
European Patent Office
Office européen des brevets

(11) **EP 2 988 860 B1**

(12) **EUROPÄISCHE PATENTSCHRIFT**

(45) Veröffentlichungstag und Bekanntmachung des Hinweises auf die Patenterteilung:
**14.06.2017   Patentblatt 2017/24**

(21) Anmeldenummer: **14719742.0**

(22) Anmeldetag: **25.04.2014**

(51) Int Cl.:
**B01J 19/00** *(2006.01)*        **B01J 4/00** *(2006.01)*

(86) Internationale Anmeldenummer:
**PCT/EP2014/058414**

(87) Internationale Veröffentlichungsnummer:
**WO 2014/174057 (30.10.2014 Gazette 2014/44)**

(54) **VERFAHREN UND VERSORGUNGSEINHEIT ZUR RESTABILISIERUNG VON RADIKALISCH POLYMERISIERBAREN MONOMEREN**

PROCESS AND SUPPLY UNIT FOR RESTABILIZATION OF FREE-RADICALLY POLYMERIZABLE MONOMERS

PROCÉDÉ ET UNITÉ D'ALIMENTATION POUR LA RESTABILISATION DE MONOMÈRE POLYMRISABLE PAR VOIE RADICALAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 26.04.2013   DE 102013007298
26.04.2013   US 201361816175 P

(43) Veröffentlichungstag der Anmeldung:
**02.03.2016   Patentblatt 2016/09**

(73) Patentinhaber: **BASF SE**
**67056 Ludwigshafen am Rhein (DE)**

(72) Erfinder:
• **MARTIN, Friedrich-Georg**
**69124 Heidelberg (DE)**
• **ODENWALD, Oliver**
**69234 Dielheim (DE)**

(56) Entgegenhaltungen:
**DE-A1- 19 822 492     DE-A1-102005 042 607**

**Beschreibung**

Die vorliegende Erfindung betrifft ein Verfahren zur Restabilisierung von radikalisch polymerisierbaren Monomeren und eine Versorgungseinheit zur Durchführung des Verfahrens.

Monomere, die radikalisch polymerisierbar sind, wie (Meth)acrylsäure und die Derivate davon, werden in der chemischen Industrie in relativ großen Behältern gehandhabt, beispielsweise in Lagertanks oder Kolonnen. Dabei besteht die Gefahr, dass durch Temperaturerhöhung, Kühlungsausfall, Stabilisatorinaktivität oder-mangel die Polymerisation der Monomere unerwünschterweise in Gang gesetzt wird. Dadurch kann es zu einer erheblichen Gefährdung der Produktionsanlage kommen, wenn die anspringende Polymerisation nicht rasch und wirksam unterbunden und gestoppt werden kann. Es ist bekannt, zu diesem Zweck Polymerisationsinhibitoren zu verwenden. Wesentlich ist dabei, dass die Polymerisationsinhibitoren in der erforderlichen Menge zugegeben und eine ausreichende Vermischung mit den Monomeren bewirkt werden kann. Eine konventionelle Einbringung der Polymerisationsinhibitoren und Vermischung mit Hilfe einer Pumpe ist nachteilig, weil die für den Betrieb einer Pumpe erforderliche Stromversorgung in einem Notfall nicht gewährleistet ist. Die WO 99/59717 beschreibt daher ein Versorgungssystem, bei dem eine Inhibitorlösung mit Hilfe eines Druckgases in z. B. einen die Monomere enthaltenden Lagertank eingebracht wird. Die Vermischung von Monomeren und Inhibitorlösung erfolgt durch weiteres Einleiten von inertem Gas, wie Stickstoff. Allerdings hat sich gezeigt, dass das in der WO 99/59717 beschriebene Versorgungssystem noch verbesserungsfähig ist.

Der vorliegenden Erfindung liegt daher die Aufgabe zugrunde, ein Verfahren zur Restabilisierung von radikalisch polymerisierbaren Monomeren und eine Vorrichtung zur Durchführung des Verfahrens zur Verfügung zu stellen, das sicherstellt, dass die Inhibitorlösung im Wesentlichen vollständig in den Monomerenbehälter eingebracht und eine ausreichende Vermischung von Monomerenbehälterinhalt und Inhibitorlösung bewirkt werden kann.

Diese Aufgabe wird gelöst durch ein Verfahren zur Restabilisierung von radikalisch polymerisierbaren Monomeren, umfassend die Schritte

a) Einbringen einer Lösung eines Inhibitors der radikalischen Polymerisation mit einem inerten Druckgas in einen die Monomere enthaltenden Behälter über wenigstens eine Leitung (Zuführungsleitung), die einen ansteigenden Bereich umfasst und an ihrem Ende Mittel zum Einleiten der Inhibitorlösung und zum Einblasen von Gas in den Behälter aufweist, und

b) Vermischen des Behälterinhalts und der Inhibitorlösung durch Einblasen von Gas durch die Leitung,

wobei man in Schritt (a) die Strömungsgeschwindigkeit des Druckgases so einstellt, dass sich als Strömungsregime der Inhibitorlösung eine Pfropfenströmung oder Ringströmung im ansteigenden Bereich der Leitung ergibt und man in Schritt (b) die Gasleerrohrgeschwindigkeit im Behälter auf $\geq 0,1$ mm/s einstellt.

Die Inhibitorlösung wird in Form einer Versorgungseinheit bereitgestellt, umfassend

(a) einen Kessel für die Inhibitorlösung mit einem in die Inhibitorlösung reichenden Entnahmerohr,
(b) wenigstens einen Druckgasspeicherbehälter, der mit dem Kessel für die Inhibitorlösung über eine Gaszuleitung verbunden ist,
(c) Mittel zur Druckverringerung am Druckgasspeicherbehälter,
(d) in der Gaszuleitung Mittel zur Einstellung der Gasleerrohrgeschwindigkeit und
(e) Mittel zum Anschluss der Entnahmeleitung an die Leitung zum Monomerenbehälter.

Unter "Restabilisierung" ist hier die Inhibierung einer bereits angelaufenen Polymerisation radikalisch polymerisierbarer Monomere und Stabilisierung der verbleibenden Monomere gegen eine weitere Polymerisation zu verstehen. Der Ausdruck "Restabilisierung" umfasst aber auch die Nachstabilisierung von Monomeren ohne dass die Polymerisation bereits angelaufen ist sowie die Stabilisierung von Monomeren, wenn eine Kontamination mit Materialien vorliegt oder zu befürchten ist, welche eine Polymerisation auslösen oder unterstützen können oder wenn ein Feuer ausgebrochen ist oder die Gefahr eines Feuers besteht.

Unter "Behälter" ist hier ein Behälter jeglicher Form zu verstehen, z.B. ein zylindrischer, rechteckiger, quadratischer oder kugelförmiger Tank. Vorzugsweise handelt es sich um einen im Wesentlichen zylindrischen Behälter, insbesondere einen stehenden zylindrischen Behälter. Das Verhältnis von Höhe zu Durchmesser des stehenden zylindrischen Behälters ist im allgemeinen $\geq$ 0,1 und liegt vorzugsweise im Bereich von 0,1 bis 8, insbesondere 0,1 bis 5. Das Tankvolumen liegt insbesondere im Bereich von 20 bis 10000 m$^3$, entsprechend einer Höhe des Tanks von 3 bis 20 m.

Bei dem Kessel für die Inhibitorlösung handelt es sich zweckmässigerweise um einen annähernd zylindrischen Behälter, vorzugsweise aus Edelstahl. Der Druckgasspeicherbehälter weist in der Regel Mittel zur Druckveringerung auf, die den Gasaustritt am Druckgasspeicherbehälter regeln. Durch Öffnen der Mittel zur Druckverringerung strömt Druckgas über die Gaszuleitung in den Kessel für die Inhibitorlösung und drückt die Inhibitorlösung über die Entnahmeleitung, die in die Inhibitorlösung, vorteilhafterweise bis fast zum Boden des Kessels für die Inhibitorlösung, reicht, in die zu dem die Monomere enthaltenden Behälter führende Leitung. Diese Leitung umfasst vorzugsweise mindestens einen horizontalen und/oder abfallenden, und einen ansteigenden, insbesondere im Wesentlichen senkrechten, Teil. Dabei kann es vorteilhaft sein, den Durchmesser des horizontalen bzw. abfallenden Teils der Leitung größer zu wählen als den Durchmesser der aufsteigenden Leitung. Dadurch werden Druckabfall und Einspeisezeit der Inhibitorlösung minimiert, insbesondere wenn die Versorgungseinheit aus Sicherheitsgründen in größerem Abstand (20 - 100 m) von dem MonomerenbehälterTank angeordnet ist. Bevorzugt hat die Leitung über ihre gesamte Länge den im Wesentlichen gleichen Durchmesser.

Bei den Mitteln zum Einleiten der Inhibitorlösung und des Mischgases handelt es sich bevorzugt um ein Rohr, das im Bereich des Bodens des Monomerenbehälters endet. Zweckmäßigerweise ist das Rohr mit einer Berstscheibe, insbesondere einer totraumfreien Berstscheibe, verschlossen, die bei Inbetriebnahme der Versorgungseinheit zerstört wird.

Gemäß einer weiteren Ausführungsform der Mittel zum Einleiten der Inhibitorlösung und des Mischgase handelt es sich um eine Teleskoplanze. Eine derartige Teleskoplanze ist in der WO 99/24161 beschrieben, auf die in vollem Umfang Bezug genommen wird.

Um sicher zu stellen, dass die gesamte in der Leitung befindliche Inhibitorlösung in den Tank transportiert wird, wird die Strömungsgeschwindigkeit des Druckgases so eingestellt, dass sich als Strömungsregime der Inhibitorlösung eine Pfropfenströmung oder Ringströmung, insbesondere im ansteigenden Teil der Leitung, ergibt. Die Ausbildung der Pfropfenströmung oder Ringströmung hängt unter anderem von der Strömungsgeschwindigkeit des Druckgases und dem Leitungsdurchmesser ab. Vorzugsweise liegt die Strömungsgeschwindigkeit des Druckgases im Bereich von 6 - 12 m/s, insbesondere 8 - 12 m/s. Die Ermittlung der Strömungsgeschwindigkeit ist dem Fachmann bekannt.

Beispielsweise kann sie nach den in Multiphase Science and Technology, Chapter 1, Seiten 1-94, von A. E. Dukler und Y. Taitel beschriebenen Methoden erfolgen.

Die Einleitung der Inhibitorlösung erfolgt vorzugsweise im Bereich des Bodens des Behälters (Abstand vom Boden bevorzugt 1/100 bis 1/10 der Behälterhöhe; bei kugelförmigen Behältern im Abstand von 1/100 bis 1/10 von der Wand). Die Einleitung kann jedoch auch in größerem Abstand vom Boden bzw. der Wand erfolgen.

Der ansteigende Teil der Zuleitung erstreckt sich insbesondere über eine Höhe von 1/10 bis 10/10 der Behälterhöhe.

Damit die Inhibitorlösung eine schon laufende Polymerisation inhibiert oder das Einsetzen einer Polymerisation verhindert, muss sie mit dem Inhalt des Monomerenbehälters wirksam vermischt werden. Zu diesem Zweck wird Gas im Bereich des Behälterbodens eingeblasen. Die in der im Behälter befindlichen Monomerflüssigkeit aufsteigenden Gasblasen bewirken eine vertikale Zirkulation des Behälterinhalts, so dass es zu einer Vermischung kommt (vorausgesetzt, die Viskosität des Behälterinhalts ist < 350 mPas, was bei den hier in Frage kommenden Monomerenflüssigkeiten und Temperaturen im Allgemeinen der Fall ist). Die Vermischung ist besonders effektiv, wenn die Leitung in der Nähe der Wand angeordnet ist und der Gasaustritt im Bereich des Bodens des Behälters erfolgt. Die Inhibitorlösung kann allerdings nur dann ihren Zweck erfüllen, wenn das Vermischen ausreichend rasch und gleichmäßig erfolgt. Es hat sich gezeigt, dass hierzu eine minimale Gasleerrohrgeschwindigkeit im Behälter von $\geq 0{,}1$ mm/s erforderlich ist. Im Allgemeinen liegt die Gasleerrohrgeschwindigkeit im Bereich von 0,1 - 20 mm/s, insbesondere 0,1 - 10 mm/s. Um dies zu erreichen, sind Mittel in der Gaszuleitung vorgesehen, welche den Druckgasspeicherbehälter mit dem Kessel für die Inhibitorlösung verbindet. Bevorzugt handelt es sich bei diesen Mitteln um eine Blende, die insbesondere in Anlehnung an die DIN ISO 5167-2 ausgebildet ist. Die Blende umfasst dabei eine Öffnung. Die Größe der Öffnung ist dabei in Abhängigkeit von dem Durchmesser der Gaszuleitung und der Größe des Behälters auszuwählen. Außerdem wird durch diese Mittel ein konstanter Gasmassenstrom bewirkt.

Die Gasleerrohrgeschwindigkeit lässt sich nach folgender Formel berechnen:

$$u_{g0} = \frac{\dot{V}_g}{A_B} = \frac{\dot{m}_g}{\rho_g \cdot A_B}$$

wobei $\dot{V}_g$ der Volumenstrom des Gases, $A_B$ die Querschnittsfläche des Monomerenbehälters, $\dot{m}_g$ der Massenstrom des Gases und $\rho_g$ die Gasdichte ist.

Die Menge an Druckgas, die erforderlich ist, um die Vermischung von Inhibitorlösung und Behälterinhalt zu bewirken, hängt von der Größe des Behälters bzw. von dem Volumen der im Behälter befindlichen Monomerenflüssigkeit ab. Sollte eine Versorgungseinheit nicht ausreichen, um während der Zeit, die zum Vermischen erforderlich ist, die minimale Gasleerrohrgeschwindigkeit aufrecht zu erhalten, ist es vorteilhaft, entweder eine Versorgungseinheit mit einem oder mehreren zusätzlichen Druckgasspeicherbehältern oder eine oder mehrere weitere seriell geschaltete Versorgungseinheiten zu verwenden. Um die Gasleerrohrgeschwindigkeit einzustellen, kann es erforderlich sein, ein oder mehrere weitere parallel geschaltete Versorgungseinheiten zu verwenden.

Als Druckgas verwendet man insbesondere Stickstoff oder ein Gemisch aus Stickstoff und Sauerstoff mit einem Volumenverhältnis von 5 bis 21 Vol.-%, insbesondere 5 bis 8 Vol.-%, Sauerstoff.

Die erfindungsgemäße Versorgungseinheit kann einen oder mehrere, bevorzugt 1 bis 6, Druckgasspeicherbehälter umfassen, die gegebenenfalls Mittel zur Druckverringerung aufweisen. Besonders bevorzugt ist die Versorgungseinheit als fahrbare Einheit ausgebildet.

Am Ende der Entnahmeleitung sind Mittel zum Anschluss der Entnahmeleitung an die Leitung zum Tank vorgesehen.

Bei der in den Behälter reichenden Leitung ist zu berücksichtigen, dass sich in Toträumen etc. oder durch Kondensation von Monomer an kalten Oberflächen inhibitorverarmtes oder inhibitorfreies Monomer bilden kann, das leicht polymerisieren und daher Verkrustungen bilden kann. Die Gefahr der Bildung von Verkrustungen kann verringert oder sogar vermieden werden, indem die Leitung mit einem geringen Strom von Stickstoff oder einem Gemisch aus Stickstoff und Sauerstoff (5-21 Vol.-% Sauerstoff) kontinuierlich gespült wird, wobei der Strom über ein Ventil in die Leitung eingespeist wird. Wenn der Gasdruck einen bestimmten Wert unterschreitet, ist es zweckmäßig ein Alarmsignal auszulösen.

Alternativ können die Verkrustungen durch die erwähnte Berstscheibe verhindert werden. Dabei wird die in den Tank reichende Leitung an ihrem Ende mit einer Berstscheibe, vorzugsweise eine totraumfreie Berstscheibe, verschlossen, die bei Inbetriebnahme der Versorgungseinheit zerstört wird. Eine weitere Alternative ist der Einsatz der erwähnten Teleskoplanze, die sich bei Nichtverwendung oberhalb des Flüssigkeitsspiegels des Behälterinhalts befindet und vor Monomerendampf und -flüssigkeit geschützt ist.

Das erfindungsgemäße Verfahren und die erfindungsgemäße Versorgungseinheit sind geeignet, eine effektive Stabilisierung von radikalisch polymerisierbaren Monomeren zu bewirken bzw. eine schon begonnene Polymerisation radikalisch polymerisierbarer Monomere zu inhibieren. Radikalisch polymerisierbare Monomere sind im allgemeinen Vinylmonomere. Beispiele hierfür sind Acrylsäure, Methacrylsäure, Acrylsäureester, Methacrylsäureester, substituierte Acrylsäureester und Methacrylsäureester, wie Hydroxyalkylacrylate und -methacrylate, Itaconsäure und die für Acrylsäure genannten Derivate davon, Maleinsäure und die für Acrylsäure genannten Derivate davon, Styrol und Derivate davon, N-Vinyllactame, wie N-Vinylpyrrolidon etc.

Geeignete Inhibitoren sind beispielsweise Phenothiazin und Derivate davon, wie N-alkylierte Phenothiazine, beispielsweise N-Benzylphenothiazin oder N-(1-Phenylethyl)phenothiazin, N-(Diphenylmethyl)phenothiazin, N,N'-Dimethylphenazin, Phenoxazin, Promazin und das Hydrochlorid davon, Carbazol, N-Ethylcarbazol, Hydrochinone und Derivate davon, wie Hydrochinonether, beispielsweise Hydrochinonmonomethylether (MeHQ), alkylsubstituierte Hydrochinone, beispielsweise Mono-t-butylhydrochinon, 2,5-Di-t-butylhydrochinon oder Toluhydrochinon.

Die Inhibitoren kommen als Lösung in einem organischen Lösungsmittel zur Anwendung. Geeignete Lösungsmittel sind insbesondere Aceton, Ethylacetat und bevorzugt N-Alkylpyrrolidone, wie N-Methylpyrrolidon (NMP) und/oder N-Ethylpyrrolidon. Eine besonders bevorzugte Inhibitorlösung ist eine Lösung von Phenothiazin in NMP. Weiterhin ist es vorteilhaft, wenn der Inhibitorgehalt der Lösung, bezogen auf das Gewicht der Inhibitorlösung, wenigstens 10 Gew.-% bis 55 Gew.-% beträgt. Besonders bevorzugt ist eine 30 - 40 Gew.-%ige Lösung von Phenothiazin in NMP, die gegebenenfalls bis zu 10 Gew.-% Hydrochinonether, insbesondere MEHQ, enthalten kann.

Die erforderliche Menge an Inhibitor richtet sich nach der Größe des Tanks, wobei für die Mengenberechnung 100% Füllhöhe zugrunde gelegt werden. Die Inhibitormenge ist weiter abhängig von dem verwendeten Inhibitor und den zu restabilisierenden Monomeren. Eine Konzentration von etwa 200 ppm bis 300 ppm Phenothiazin ist in den meisten Fällen in der Lage, die Polymerisation der Monomere zu inhibieren. Es hat sich gezeigt, dass in den meisten Fällen Konzentrationen von 50 bis 1000 ppm Phenothiazin ausreichend sind, um die Polymerisation derart zu inhibieren, dass sie keine Gefahr mehr darstellt. Sollte die Menge an Inhibitorlösung einer Versorgungseinheit nicht ausreichen, um eine Stabilisierung der Monomeren zu bewirken, so verwendet man eine oder mehrere weitere seriell geschaltete Versorgungseinheiten.

Für eine 35%ige Lösung von Phenothiazin in N-Methylpyrrolidon ergibt sich für Temperaturen von -10°C oder höher eine ausreichende Fließfähigkeit für den praktischen Einsatz. Dennoch ist es zweckmäßig, die Lösung und die Versorgungseinheit bei Temperaturen > 0°C zu lagern. Eine 35%-ige Lösung von Phenothiazin in N-Methylpyrrolidon (w/w) hat eine Lagerfähigkeit von etwa fünf Jahren bei üblichen Lagerbedingungen (0 - 60°C).

Das erfindungsgemäße Verfahren und die erfindungsgemäße Versorgungseinheit ermöglichen die Restabilisierung von radikalisch polymerisierbaren Monomeren auf verlässliche, rasche und wirtschaftliche Weise und sind unabhängig von Energiequellen und Mischeinrichtungen, was besonders in Notfällen mit Unterbrechung der Stromversorgung von Bedeutung ist. Der Inhibitor kann rasch in den Tank eingebracht und mit dem Tankinhalt vermischt und somit eine radikalische Polymerisation auch in fortgeschrittenem Stadium zuverlässig inhibiert werden.

Die Erfindung wird anhand eines Ausführungsbeispiels mit Bezug zu den Zeichnungen erläutert. Es zeigen:

Fig. 1     eine schematische Darstellung der an einen Tank angeschlossenen Versorgungseinheit,

Fig. 2     eine Draufsicht auf die in Fig. 1 dargestellte Versorgungseinheit und

Fig.3     eine Detailansicht des in Fig. 2 gezeigten Ventils.

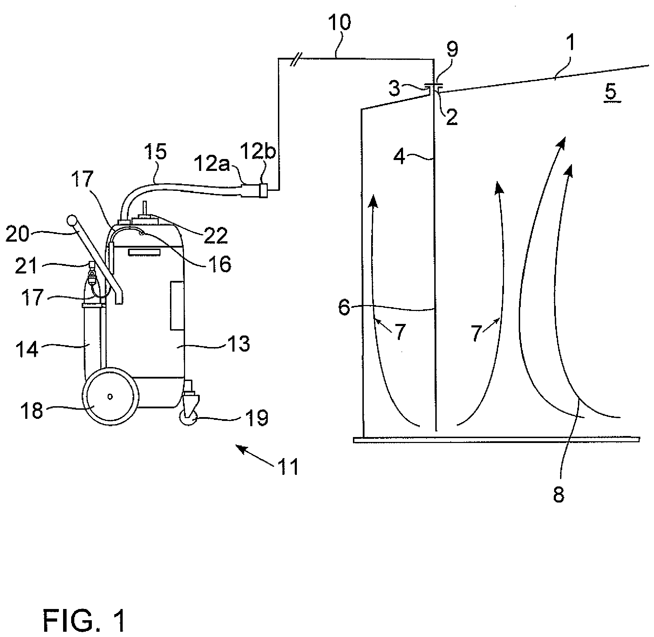

Die Fig. 1 zeigt eine schematische Darstellung einer mit einem Behälter 1 verbundenen erfindungsgemäßen Versorgungseinheit 11. Der Behälter ist dabei als Tank 1 ausgebildet. Der Tank 1 weist eine Öffnung 2 mit einem vertikalen Anschlussflansch 3 auf. Durch die Öffnung 2 ragt ein Rohr 4 einer Vorrichtung zum Einbringen der Inhibitorlösung und des Mischgases in den Innenraum 5 des Tanks 1. Das Rohr 4 mit dem in der Nähe des Bodens des Tanks 1 befindlichen Ende 6 dient zur Einspeisung von Inhibitorlösung und Mischgas. Das Rohr 4 ist an seinem anderen Ende mit einem Tragflansch 9 zur Befestigung an dem Flansch 3 des Tanks 1 versehen, wobei die Befestigung direkt oder unter Verwendung eines Zwischenflansches erfolgen kann. An dieses Rohr 4 ist eine Zuführungsleitung 10 für die in den Innenraum 5 einzubringende Inhibitorlösung und das Mischgas angeschlossen. Die Zuführungsleitung 10 umfasst dabei einen im Wesentlichen horizontalen Teil und einen im Wesentlichen senkrecht ansteigenden Teil. Alternativ kann der horizontale Teil auch absteigend ausgebildet sein.

Die erfindungsgemäße Versorgungseinheit 11 wird erst im Gefahrenfall an die Zuführungsleitung 10 angeschlossen, wozu Kupplungsmittel 12a und 12b vorgesehen sind. Die Inhibitorlösung befindet sich im Kessel 13 der Versorgungseinheit 11, der mit zwei Druckgasspeicherbehältern in Form von Treibgasflaschen 14 verbunden ist. Aufgrund der Seitenansicht ist nur eine der beiden Treibgasflaschen 14 erkennbar. Innerhalb des Vorratsraums des Kessels 13 befindet sich ein Entnahmerohr, welches sich mit seinem einen Ende fast bis zu dem Boden des Kessels 13 erstreckt, wobei das andere Ende an den Schlauch 15 angeschlossen ist. Durch das Öffnen der Treibgasflaschen 14 wird über die Druckgaszuführungen 17 Druckgas in den Kessel 13 eingeleitet, so dass die Inhibitorlösung aus dem Kessel 13 über das Entnahmerohr ausgetrieben und durch das Rohr 4 in den Tankinhalt eingebracht wird. Anschließend wird Gas aus den Treibgasflaschen 14 über den Kessel 13 und die Zuleitung 10 in den Tank 1 so eingeleitet, dass die Gasleerrohrgeschwindigkeit ≥ 0,1 m/s beträgt. Aufgrund der aufsteigenden Gasblasen wird eine aufwärtsgerichtete Strömung im Innenraum 5 des Tanks 1 hervorgerufen, die durch die Pfeile 7 verdeutlicht wird. Diese Aufwärtsströmung im Bereich des Rohres 4 induziert auch in benachbarten Bereichen eine entsprechende Strömung, dargestellt durch die Pfeile 8. Durch das Einleiten des Gases wird eine intensive Durchmischung des Tankinhalts mit der Inhibitorlösung bewirkt. Um eine besonders effektive Vermischung zu erzeugen, ist das Ende 6 des Rohres 4 in der Nähe einer Wand des Tanks 1 und insbesondere in der Nähe des Bodens des Tanks 1 angeordnet. Alternativ kann das Rohr 4 auch durch die Seitenwand des Tanks 1 in den Innenraum 5 des Tanks geführt werden.

Die Versorgungseinheit 11 ist beabstandet von dem Tank 1 angeordnet. Aus Sicherheitsgründen sollte der Abstand zwischen der Versorgungseinheit 11 und dem Tank 1 mindestens 20 m betragen. Um eine akzeptable Einspeisezeit zu gewährleisten, sollte der Abstand jedoch maximal 200 m betragen.

Das Kupplungsmittel 12a ist über einen flexiblen Schlauch 15 mit dem Entnahmerohr verbunden, während das Kupplungsmittel 12b an dem Ende der Zuführungsleitung 10 befestigt ist. Der Kessel 13 ist mit Rollen 18, 19 und einem Griff 20 versehen, so dass die Versorgungseinheit 11 von Hand verfahren werden kann. Dabei tragen die Räder 18 im Wesentlichen das Gewicht der Versorgungseinheit und das Rad 19 ist als Lenkrolle ausgeführt. Zwischen dem Kessel 13 und den Treibgasflaschen 14 sind Druckminderventile 21 geschaltet, mittels welchen das unter hohem Druck die Treibgasflaschen 14 verlassende Gas auf einen konstanten Druck von etwa 10 bar entspannt wird. Der Kessel 13 weist eine Einfüllöffnung auf, deren Verschluss 22 mit einem Sicherheitsüberdruckventil versehen ist. Wird die Versorgungseinheit 11 betätigt, baut sich in dem Rohr 4 ein Druck auf. Dadurch wird die Inhibitorlösung durch das Rohr 4 in den Tankinnenraum 5 gedrückt. Die Strömungsgeschwindigkeit des Druckgases wird dabei so eingestellt, dass sich im senkrecht ansteigenden Teil der Zuführungsleitung 10 als Strömungsregime der Inhibitorlösung eine Pfropfenströmung oder Ringströmung ergibt. Dadurch wird sichergestellt, dass die gesamte in der Leitung 10 befindliche Inibitorlösung in den Tank 1 transportiert wird. Die Strömungsgeschwindigkeit wird dazu auf einen Wert zwischen 6 und 12 m/s, insbesondere auf einen Wert zwischen 8 und 12 m/s, eingestellt.

Da sich die Menge der benötigten Inhibitorlösung nach der Größe des Tanks 1 bemisst, ist es bei großen Tanks 1 notwendig, mehr als eine Versorgungseinheit 11 an den Tank 1 anzuschließen. Dazu können mehrere Versorgungseinheiten 11 parallel geschaltet werden. Je nach Bedarf an Mischgas kann die Versorgungseinheit 11 einen oder mehrere Druckgasspeicherbehälter 14 umfassen.

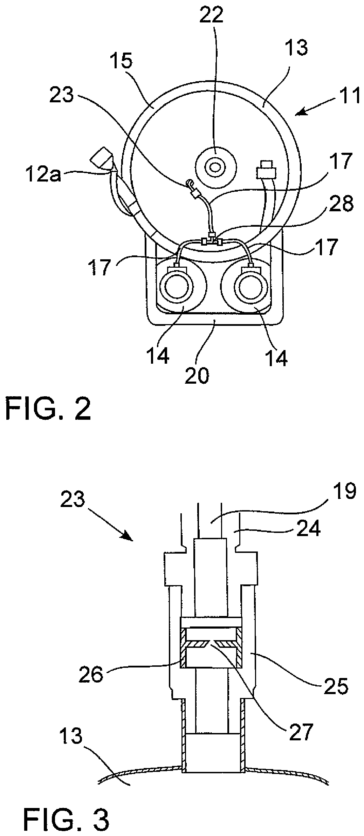

In Figur 2 wird die Draufsicht auf die aufgerichtete Versorgungseinheit gezeigt. Zu erkennen ist der Kessel 13, die daran befestigten Treibgasflaschen 14 und der Griff 20. Um den Kessel 13 ist der Schlauch 15 gewickelt, dessen Ende mit dem Kupplungsmittel 12a versehen ist. Die Druckgaszuführungen 19 der beiden Treibgasflaschen 14 werden in einem drei-Wege-Anschluss 28 in eine gemeinsame Zuführung 17 geleitet. Die gemeinsame Zuführung 17 leitet das Druckgas aus beiden Treibgasflaschen 14 über ein Anschlussstück 23 in den Behälter.

In Figur 3 ist das Anschlussstück 23, welches die gemeinsame Zuführung 17 mit dem Kessel 13 verbindet, im Detail gezeigt. Das Anschlussstück 23 umfasst dabei ein oberes Teil 24 und ein unteres Teil 25, wobei das untere Teil 25 das obere Teil 24 umschließt. Die Druckgaszuführung 17 endet in dem oberen Teil 24. Zwischen dem oberen 24 und dem unteren Teil 25 befindet sich eine Blende 26 mit einer Öffnung 27. Die Größe der Öffnung 27 wird dabei gemäß dem Durchmesser der Zuführungsleitung 10 und der Größe des Tanks 1 gewählt.. Dadurch lässt sich die erforderliche Gasleerohrgeschwindigkeit einstellen. Insbesondere wird mittels der Auswahl des Durchmessers der Öffnung die Gasleerrohrgeschwindigkeit derart eingestellt, dass sie ≥ 0,1 mm/s ist. Dadurch wird eine ausreichend rasche und gleichmäßige Vermischung der Inhibitorlösung mit dem Inhalt des Tanks 1 gewährleistet.

**BEZUGSZEICHENLISTE**

| | |
|---|---|
| 1 | Tank |
| 2 | Öffnung |
| 3 | Anschlussflansch |
| 4 | Rohr |
| 5 | Innenraum des Tanks |
| 6 | Rohrende |
| 7 | Aufwärtsgerichtete Strömung im Bereich des Rohres |
| 8 | Aufwärtsgerichtete Strömung in zum Rohr benachbarten Bereichen |
| 9 | Tragflansch |
| 10 | Zuführungsleitung |
| 11 | Versorgungseinheit |
| 12 | Kupplungsmittel |
| 13 | Kessel für die Inhibitorlösung |
| 14 | Druckgasspeicherbehälter |
| 15 | Schlauch |
| 16 | Anschluss für eine Druckgaszuführung |
| 17 | Druckgaszuführung |
| 18 | Rad |
| 19 | Rad |
| 20 | Griff |
| 21 | Druckminderventil |
| 22 | Verschluss der Einfüllöffnung des Druckgasspeicherbehälters |
| 23 | Anschlussstück |
| 24 | Oberer Teil des Ventils |
| 25 | Unterer Teil des Ventils |
| 26 | Blende |
| 27 | Öffnung der Blende |
| 28 | Drei-Wege-Anschluss |

**Patentansprüche**

1. Verfahren zur Stabilisierung von radikalisch polymerisierbaren Monomeren, umfassend die Schritte

 a) Einbringen einer Lösung eines Inhibitors der radikalischen Polymerisation mit einem inerten Druckgas in einen die Monomere enthaltenden Behälter (1) über mindestens eine Leitung (10), die einen ansteigenden Bereich umfasst und an ihrem Ende Mittel zum Einleiten der Inhibitorlösung und zum Einblasen von Gas in den Behälter aufweist, und

 b) Vermischen des Behälterinhalts und der Inhibitorlösung durch Einblasen von Gas durch die Leitung (10),

wobei man in Schritt (a) die Strömungsgeschwindigkeit des Druckgases so einstellt, dass sich als Strömungsregime der Inhibitorlösung eine Pfropfenströmung oder Ringströmung in dem ansteigenden Bereich der Leitung (10) ergibt und man in Schritt (b) die Gasleerrohrgeschwindigkeit im Behälter (1) auf ≥ 0,1 mm/s einstellt.

2. Verfahren nach Anspruch 1, wobei man in Schritt (a) die Strömungsgeschwindigkeit des Druckgases auf 6 bis 12 m/s einstellt.

3. Verfahren nach Anspruch 1 oder 2, wobei man in Schritt (b) die Gasleerrohrgeschwindigkeit auf ≥ 0,1 bis 20 mm/s einstellt.

4. Verfahren nach einem der vorhergehenden Ansprüche, wobei die Inhibitorlösung (17) und der Gasvorrat durch wenigstens eine Versorgungseinheit (11) bereitgestellt werden, die einen Kessel (13) für die Inhibitorlösung und wenigstens einen Druckgasspeicherbehälter (14) umfasst.

5. Verfahren nach Anspruch 4, wobei die Versorgungseinheit (11) vom Behälter (1) beabstandet angeordnet und über die Leitung (10) mit dem Behälter (1) verbunden ist.

6. Verfahren nach einem der vorhergehenden Ansprüche, wobei die Leitung (10) von der Versorgungseinheit (11) zum Behälter (1) durch den Deckel des Monomerenbehälters (1) geführt wird.

7. Verfahren nach einem der vorhergehenden Ansprüche, wobei mehrere Versorgungseinheiten (11) hintereinander oder parallel an die Leitung (10) angeschlossen sind.

8. Versorgungseinheit (11) zur Durchführung des Verfahrens nach einem der vorhergehenden Ansprüche, umfassend

 (a) einen Kessel (13) für die Inhibitorlösung mit einem in die Inhibitorlösung reichenden Entnahmerohr,
 (b) wenigstens einen Druckgasspeicherbehälter (14), der mit dem Kessel (13) für die Inhibitorlösung über eine Gaszuleitung (17) verbunden ist,
 (c) Mittel zur Druckveringerung (21) am Druckgasspeicherbehälter (14),
 (d) in der Gaszuleitung (17) Mittel (26) zur Einstellung der Gasleerrohrgeschwindigkeit und
 (e) Mittel (12a, 12b) zum Anschluss der Entnahmeleitung an die Leitung (10) zum Behälter (1).

9. Versorgungseinheit (11) nach Anspruch 8, wobei die Mittel (26) zur Einstellung der Gasleerrohrgeschwindigkeit ein Anschlussstück (23) aufweisen.

10. Versorgungseinheit (11) nach Anspruch 9, wobei das Anschlussstück (23) eine Blende (26) umfasst.

11. Versorgungseinheit (11) nach einem der Ansprüche 8 bis 10, die ein bis sechs Druckgasspeicherbehälter (14) aufweist.

12. Versorgungseinheit (11) nach einem der Ansprüche 8 bis 11, die als fahrbare Einheit ausgebildet ist.

**Claims**

1. A process for stabilizing free-radically polymerizable monomers, which comprises the steps

   a) introduction of a solution of an inhibitor of the free-radical polymerization by means of an inert pressurized gas into a vessel (1) comprising the monomers via at least one line (10) which comprises an ascending region and at its end means for introducing the inhibitor solution and for blowing gas into the vessel, and
   b) mixing of the contents of the vessel and the inhibitor solution by blowing gas through the line (10),

   where the flow velocity of the pressurized gas in step (a) is set so that plug flow or annular flow is obtained as flow regime of the inhibitor solution in the ascending region of the line (10) and the superficial gas velocity in the vessel (1) in step (b) is set to $\geq 0.1$ mm/s.

2. The process according to claim 1, wherein the flow velocity of the pressurized gas in step (a) is set to from 6 to 12 m/s.

3. The process according to claim 1 or 2, wherein the superficial gas velocity in step (b) is set to from $\geq 0.1$ to 20 mm/s.

4. The process according to any of the preceding claims, wherein the inhibitor solution (17) and the gas stock are provided by at least one supply unit (11) which comprises a vessel (13) for the inhibitor solution and at least one pressurized gas reservoir (14).

5. The process according to claim 4, wherein the supply unit (11) is arranged at a distance from the vessel (1) and is connected to the vessel (1) via the line (10).

6. The process according to any of the preceding claims, wherein the line (10) runs from the supply unit (11) to the vessel (1) through the lid of the monomer vessel (1).

7. The process according to any of the preceding claims, wherein a plurality of supply units (11) are connected in series or in parallel to the line (10).

8. A supply unit (11) for carrying out the process according to any of the preceding claims, which comprises

   (a) a vessel (13) for the inhibitor solution having an offtake tube extending into the inhibitor solution,
   (b) at least one pressurized gas reservoir (14) which is connected to the vessel (13) for the inhibitor solution via a gas feed line (17),
   (c) means for reducing the pressure (21) on the pressurized gas reservoir (14),
   (d) means (26) in the gas feed line (17) for setting the superficial gas velocity and
   (e) means (12a, 12b) for connecting the offtake line to the line (10) to the vessel (1).

9. The supply unit (11) according to claim 8, wherein the means (26) for setting the superficial gas velocity has a connecting piece (23).

10. The supply unit (11) according to claim 9, wherein the connecting piece (23) comprises an orifice plate (26).

11. The supply unit (11) according to any of claims 8 to 10 which has from one to six pressurized gas reservoirs (14).

12. The supply unit (11) according to any of claims 8 to 11 which is configured as a mobile unit.

**Revendications**

1. Procédé de stabilisation de monomères polymérisables par voie radicalaire, comprenant les étapes suivantes :

   a) l'introduction d'une solution d'un inhibiteur de la polymérisation radicalaire avec un gaz comprimé inerte dans un contenant qui contient les monomères (1) par au moins une conduite (10), qui comprend une zone ascendante et à son extrémité des moyens pour l'introduction de la solution d'inhibiteur et pour l'injection de gaz dans le contenant, et
   b) le mélange du contenu du contenant et de la solution d'inhibiteur par injection de gaz par la conduite (10),

   la vitesse d'écoulement du gaz comprimé à l'étape (a) étant ajustée de manière à obtenir en tant que régime d'écoulement de la solution d'inhibiteur un écoulement piston ou un écoulement annulaire dans la zone ascendante de la conduite (10) et la vitesse de gaz en tube vide dans le contenant (1) à l'étape (b) étant ajustée à ≥ 0,1 mm/s.

2. Procédé selon la revendication 1, dans lequel la vitesse d'écoulement du gaz comprimé à l'étape (a) est ajustée de 6 à 12 m/s.

3. Procédé selon la revendication 1 ou 2, dans lequel la vitesse de gaz en tube vide à l'étape (b) est ajustée de ≥ 0,1 à 20 mm/s.

4. Procédé selon l'une quelconque des revendications précédentes, dans lequel la solution d'inhibiteur (17) et le stock de gaz sont fournis par au moins une unité d'alimentation (11), qui comprend une cuve (13) pour la solution d'inhibiteur et au moins un contenant de stockage de gaz comprimé (14).

5. Procédé selon la revendication 4, dans lequel l'unité d'alimentation (11) est agencée à distance du contenant (1) et raccordée avec le contenant (1) par la conduite (10).

6. Procédé selon l'une quelconque des revendications précédentes, dans lequel la conduite (10) conduit de l'unité d'alimentation (11) au contenant (1) au travers du couvercle du contenant de monomères (1).

7. Procédé selon l'une quelconque des revendications précédentes, dans lequel plusieurs unités d'alimentation (11) sont raccordées en série ou en parallèle à la conduite (10).

8. Unité d'alimentation (11) pour la réalisation du procédé selon l'une quelconque des revendications précédentes, comprenant :

   (a) une cuve (13) pour la solution d'inhibiteur, comprenant un tube de soutirage qui atteint la solution d'inhibiteur,
   (b) au moins un contenant de stockage de gaz comprimé (14), qui est raccordé avec la cuve (13) pour la solution d'inhibiteur par une conduite d'alimentation de gaz (17),
   (c) des moyens de réduction de la pression (21) dans le contenant de stockage de gaz comprimé (14),
   (d) dans la conduite d'alimentation de gaz (17), des moyens (26) pour l'ajustement de la vitesse de gaz en tube vide, et
   (e) des moyens (12a, 12b) pour le raccordement de la conduite de soutirage à la conduite (10) vers le contenant (1).

9. Unité d'alimentation (11) selon la revendication 8, dans laquelle les moyens (26) pour l'ajustement de la vitesse de gaz en tube vide comprennent un raccord (23).

10. Unité d'alimentation (11) selon la revendication 9, dans laquelle le raccord (23) comprend une chicane (26).

11. Unité d'alimentation (11) selon l'une quelconque des revendications 8 à 10, qui comprend un à six contenants de stockage de gaz comprimé (14).

12. Unité d'alimentation (11) selon l'une quelconque des revendications 8 à 11, qui est configurée sous la forme d'une unité mobile.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9959717 A

- WO 9924161 A


**In der Beschreibung aufgeführte Nicht-Patentliteratur**

- **A. E. DUKLER ; Y. TAITEL.** *Multiphase Science and Technology,* vol. 1, 1-94